# EUROPEAN PATENT APPLICATION

(11) **EP 4 456 338 A1**
(43) Date of publication of application: **30.10.2024**
(21) Application number: 24172517.5
(22) Date of filing: 25.04.2024
(51) Int. Cl.: H01R 13/52, F16J 15/10

(54) **CONNECTOR SEAL WITH WAVE-SHAPED SEALING LIP**

(30) Priority: 28.04.2023 DE 102023111060
(71) Applicant: TE Connectivity Solutions GmbH, 8200 Schaffhausen (CH)
(72) Inventor: FLOESSER, Michael, 8200 Schaffhausen (CH); WOEBER, Andreas, 8200 Schaffhausen (CH); HELM, Sebastian, 8200 Schaffhausen (CH)
(74) Representative: Grünecker Patent- und Rechtsanwälte PartG mbB

(57) **Abstract**

The invention relates to a connector seal (1) for sealing a gap (7) between a first connector (3) and a second connector (5) of a plug connection in a state of being plugged together, wherein the connector seal (1) extends in a self-contained manner along a circumferential direction (U) around a central opening (9), wherein the connector seal (1) has two face sides (13, 15) disposed opposite one another in an axial direction (A), wherein the connector seal (1) has an inner side (17) facing the central opening (9) in the radial direction (R) and an outer side (19) facing away from the central opening (9) in the radial direction (R), one of which is an abutment side ( 21) for the abutment against the first connector (3) and the other is a contact side (23) for the abutment, in particular in a sealing manner, against the second connector (5) in the state of the plug connection being plugged together. In order to reduce the plugging force necessary for plugging the two connectors (3, 5) together, it is provided that the contact side (23) comprises at least one sealing lip (31) which extends along the circumferential direction (U) and the position of which changes in a wave-shaped manner in the axial direction (A).

## Description

The invention relates to a connector seal for sealing a gap between a first connector and a second connector of a plug connection in a state of being plugged together, wherein the connector seal extends in a self-contained manner along a circumferential direction around a central opening, wherein the connector seal comprises two face sides disposed opposite one another in an axial direction, wherein the connector seal comprises an inner side facing the central opening in the radial direction and an outer side facing away from the central opening in the radial direction, one of which is an abutment side for the abutment, in particular for permanent abutment, against the first connector and the other side a contact side for the abutment, in particular in a sealing manner, against the second connector in the state of the plug connection being plugged together.

Connector seals are used to create sealed plug connections. A connector seal can be attached, for example, to an outer side of a housing wall of a first connector. When plugged together, the second connector can abut, in particular with a housing wall, against the connector seal, where a connection sealed toward the outside is created between the two connectors. This connection can extend all around in the circumferential direction. Alternatively, a connector seal can be attached to an inner side of a housing wall of the first connector that extends all around in a circumferential direction. When the plug connection is in the state of being plugged together, an outer side of a housing wall of the second connector can abut against the connector seal and thus establish the sealed connection.

When two connectors are being plugged together, one of which is provided with a connector seal, high plugging forces can be necessary under certain circumstances. This can be the case in particular when the connectors are plugged together for the first time.

It is therefore the object of the invention to provide a connector seal that facilitates plugging together a first connector provided with the connector seal and a second connector.

This object is satisfied in that the contact side comprises at least one sealing lip which extends along the circumferential direction and the position of which changes in a wave-shaped manner in the axial direction.

Due to the wave shape, the at least one sealing lip does not extend exactly parallel to the circumferential direction. Instead, regions of the sealing lip, which can be referred to as maxima or crests, extend further in the axial direction than other regions, which can be referred to as minima or troughs. When a connector provided with the connector seal according to the invention is plugged together with the second connector, the regions with the maxima first come into contact with the second connector, while the regions of the sealing lip spaced apart in the axial direction from the maxima come into contact with the second connector only in the later course of the plugging process. Since the entire sealing lip does not come into contact with the second connector from the start when plugging the connectors together, the plugging force required to plug the two connectors together can be reduced.

The at least one maximum of the wave shape of the at least one sealing lip preferably points in a plugging direction which runs parallel to the axial direction and which preferably coincides with a plugging direction of a connector provided with the connector seal.

The connector seal is preferably substantially ring-shaped, whereas the term "ring-shaped" is not restricted to a circular shape. The connector seal can, in particular, comprise an overall rectangular shape, in particular a rounded rectangular shape, an oval shape, a square or another polygonal shape.

The profile of the connector seal defines a circumferential direction. A plane spanned by the circumferential direction extends parallel to the radial direction and perpendicular to the axial direction of the connector seal.

The invention also relates to a connector, in particular to a plug or a socket, with a housing wall extending along a circumferential direction of the connector all around a central opening and with at least one connector seal according to the invention which abuts with its abutment side against the housing wall. The central opening of the connector can coincide with the central opening of the connector seal in a state in which the connector seal is attached at the connector. Contact elements, a plug face and/or other parts of a connector can be arranged in the central opening.

The connector seal can be arranged, for example, at a side of the housing wall facing away from the central opening of the connector. In this case, the abutment side of the connector seal is arranged at the inner side of the connector seal. The connector seal can be, for example, stretched around the housing wall and retained at the housing wall, for example, due to an elastic restoring force. Alternatively or additionally, the connector seal can be permanently attached to the housing wall, in particular by way of an adhesive or by spraying the connector seal onto the connector.

As an alternative to the abutment against an outer side of the housing wall, the connector seal can be arranged at a side of the housing wall facing the central opening of the connector. In this case, the abutment side of the connector seal is arranged at the outer side of the connector seal. In order to retain the connector seal at the connector, it can, in particular, be glued to the housing wall of the connector or sprayed thereonto.

The invention also relates to a plug connection comprising a first connector, a second connector, and a connector seal according to the invention, wherein the connector seal is arranged in a sealing manner in a gap between the two connectors when the two connectors are in a state of being plugged together. The first connector of the plug connection is preferably a connector according to the invention.

The solution according to the invention can be further improved by various configurations that are advantageous on their own and can be arbitrarily combined. These configurations and the advantages associated therewith shall be described hereafter.

According to a first advantageous embodiment of the connector seal, the at least one sealing lip can extend all around in the circumferential direction.

The wave shape of the at least one sealing lip can be in particular sinusoidal. However, it can also be configured differently. The sealing lip preferably comprises a plurality of maxima, wherein a minimum is disposed between at least two of the maxima. Alternatively, a rectilinear profile of the sealing lip, in particular parallel to the circumferential direction, can be present between two wave crests, at least in sections. If the at least one sealing lip comprises several maxima, a tilting of the two connectors relative to one another when plugging them together can be prevented in particular.

According to a further advantageous embodiment of the connector seal, the outer side can be the contacting side. This allows the connector seal to be arranged around the outer side of the first connector. Alternatively, the inner side can be the contacting side.

The abutment side can also be provided with at least one sealing lip. The at least one sealing lip of the abutment side can likewise comprise a wave shape.

Advantageous embodiments and configurations of the sealing lips are described below. Even if they are described in relation to the contacting side, the configurations of the sealing lips can also be used for the sealing lip of the abutment side, provided the abutment side comprises one or more sealing lips.

In order to obtain a good seal by way of the connector seal, the contacting side and/or the abutment side can comprise two or more sealing lips which are arranged one above the other in the axial direction.

Preferably, at least two of the sealing lips extend equidistant from one another along the circumferential direction. In this way, a uniform seal can be obtained. In other words, at least two of the sealing lips can maintain the same axial distance from one another in their circular extension along the circumferential direction. The sealing lips can both have the same wave shape and run parallel to one another.

Preferably, the wave shape of the at least one sealing lip comprises at least two maxima which are arranged to be diametrically opposite to one another across the central opening. This can ensure that, when the first connector is plugged to the second connector, the two maxima first touch the second connector. This can avoid a one-sided load during the plugging process and thus reduce the risk of the two connectors tilting relative to one another.

In order to obtain a uniformly acting plugging force along the circumferential direction, the maxima of a sealing lip that comprises more than two maxima can be arranged at the same distance from one another in the circumferential direction.

In order to be able to support the connector seal in the axial direction on the first connector, one of the axial face sides can comprise a flange section at which the cross section of the connector seal is enlarged. Particularly preferably, the connector seal can have a substantially L-shaped cross section. The vertical part of the L-shape can comprise the face side disposed opposite the flange section as well as the outer side and the inner side, and the horizontal section of the L-shape can form the flange section.

The flange section is preferably arranged at the outer side and extends in the radial direction away from the remaining connector seal. In other words, the flange section can form a ring disk extending around the central opening.

In order to obtain a uniform seal along the axial direction, at least one maximum of the wave-shaped sealing lip can extend up to the face side disposed opposite the flange section.

It is particularly preferable that at least one minimum of the wave-shaped sealing lip extends up to the flange section.

In order to facilitate plugging the two connectors together, the connector seal, when viewed in the axial direction, can have the shape of a rectangle, in particular a rounded rectangle, and at least one maximum of the wave-shaped sealing lip can be arranged at a corner of the rectangular shape. In other words, a maximum of the wave shape can coincide with the center of a corner. There is preferably a maximum disposed at every corner.

The connector seal according to the invention can be used for existing forms of connectors. In particular for those connectors that use a connector seal with sealing lips. The connector seal can then be manufactured and sold separately from the connector.

The invention shall be explained hereafter in more detail by way of example using an advantageous embodiment with reference to the drawings. The feature combination illustrated in the embodiment by way of example can be supplemented by further features according to the above explanations in accordance with the properties of the connector seal of the invention that are required for a specific application. In accordance with the above explanations, individual features can also be omitted in the embodiment described, where the effect of this feature is irrelevant in a specific case of application. The same reference characters in the drawings are always used for elements having the same function and/or the same structure.
- Fig. 1: shows a first advantageous embodiment of a connector seal according to the invention in a perspective illustration; and
- Fig. 2: shows a view of a part of the connector seal from Figure 1 from a different perspective.

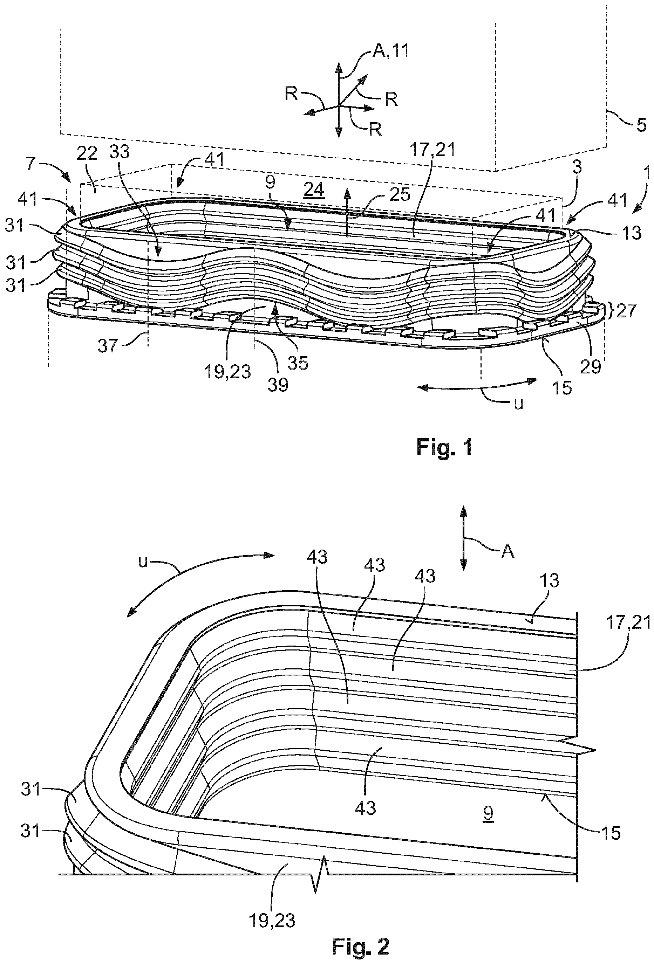

The structure of an advantageous embodiment of a connector seal 1 according to the invention shall be described hereafter with reference to Figures 1 and 2.

By way of example only, connector seal 1 is shown at a first connector 3 illustrated in dashed lines which is configured to be plugged together with a second connector 5 in order to establish a plug connection between first connector 3 and second connector 5.

Connector seal 1 is used to seal a gap 7 which extends between connectors 3 and 5 in a state of being plugged together.

Connector seal 1 extends along a circumferential direction U around a central opening 9. The connector seal extends in a ring-like manner, i.e. in a self-contained manner, along circumferential direction U.

An axial direction A of connector seal 1 extends perpendicular to an imaginary plane (not shown) spanned by circumferential direction U.

Radial direction R extends perpendicular to axial direction A which preferably coincides with a central axis 11 of connector seal 1.

Connector seal 1 comprises two face sides 13 and 15 disposed opposite one another in axial direction A.

In addition, connector seal 1 comprises an inner side 17 facing central opening 9 in radial direction R and an outer side 19 facing away from the central opening in the radial direction.

One of sides 17 and 19 can be an abutment side 21 for the abutment against first connector 3. In the embodiment of connector seal 1 shown by way of example, this is inner side 17.

Outer side 19 disposed opposite abutment side 21 in radial direction R is then contact side 23 which abuts in a sealing manner against second connector 5 in a state when the plug connection is plugged together.

Connector seal 1 abuts with its abutment side 21 against a housing wall 22 of first connector 3. First connector 3 comprises a central opening 24 which coincides with central opening 9 of connector seal 1.

Connector seal 1 is preferably manufactured from elastic material, for example, an elastomer.

A plugging direction 25 of connector seal 1 can extend parallel to axial direction A and also define the plugging direction of first connector 3.

Plugging direction 25 can be taken into account in the shape of connector seal 1. Connector seal 1 preferably comprises a flange section 27 on the face side which is arranged on the side of connector seal 1 disposed opposite plugging direction 25. In the embodiment described by way of example, this is face side 15.

When first connector 3 provided with connector seal 1 is plugged together with second connector 5, face side 13 first touches second connector 5. Flange section 27, in which the cross section of connector seal 1 is enlarged, can serve to securely support connector seal 1 at first connector 3. Connector seal 1 can be supported at first connector 3 with flange section 27.

In flange section 27, connector seal 1 preferably comprises an L-shaped cross section. In particular, connector seal 1 in flange section 27 can comprise a ring-disk-shaped flange 29 which extends around the remainder of connector seal 1.

At contact side 23, connector seal 1 comprises at least one sealing lip 31 extending along circumferential direction U. Connector seal 1 is shown with three sealing lips 31 purely by way of example.

Three sealing lips 31 are shown arranged one above the other in axial direction A purely by way of example. Also purely by way of example, all three sealing lips 31 are shown equidistant from one another or parallel to one another.

The shape of sealing lips 31 shall be discussed hereafter. Since the shape of three sealing lips 31 is the same, at least in the embodiment shown by way of example, only a single sealing lip 31 is described for the sake of simplicity.

Sealing lip 31 extends in a wave-shaped manner along outer side 19 around connector seal 1. In other words, the position of sealing lip 31 changes in a wave-shaped manner in axial direction A. Sealing lip 31 preferably has a substantially sinusoidal profile. However, the profile can also take other shapes.

Due to the wave-shaped profile, sealing lip 31 comprises alternating wave troughs 33 and wave crests 35. Minima 37 of the wave shape are in wave troughs 33 and maxima 39 of the wave shape are in wave crests 35.

Sealing lips 31 with their wave crests 35 and therefore with maxima 39 preferably point in insertion direction 25.

In the region of maxima 39 of upper sealing lip 31 when viewed in plugging direction 25, connector seal 1 first comes into contact with second connector 5 when first connector 3 is plugged together with second connector 5.

Since the remaining regions of sealing lip 31, in particular in the region of minima 37, are not yet in contact with connector 5 at this point in time, a plugging force must be applied which is smaller than a plugging force in the case of a sealing lip that extends around connector seal 1 with no wave shape, i.e., for example, parallel to circumferential direction U.

The above can also apply to further sealing lips 31 which first come into contact with second connector 5 in the region of their maxima 39 and only come into complete contact with second connector 5 as the plugging process continues.

Preferably, sealing lips 31 each have two of their maxima 39 disposed across central opening 9 diametrically opposite each other. In this way, a uniform contact pressure or plugging force can be obtained along circumferential direction U when two connectors 3 and 5 are plugged together.

The embodiment of connector seal 1 shown by way of example has the shape of a rounded rectangle. The maximum 39 of a sealing lip 31 is preferably located at each corner 41 of the rectangular shape.

Uppermost sealing lip 31 in plugging direction 25 extends at least with its maxima 39 preferably up to face side 13.

Sealing lip 31 disposed opposite this sealing lip 31 in axial direction A, or lowermost sealing lip 31, respectively, preferably extends with its minima 37 up to or into flange section 27.

Abutment side 21 preferably comprises sealing lips 43. They can be configured to be wave-shaped like sealing lips 31 of contact side 23. However, this is not mandatory.

### Reference Numerals

- 1: connector seal
- 3: first connector
- 5: second connector
- 7: gap
- 9: central opening
- 11: central axis
- 13, 15: face sides
- 17: inner side
- 19: outer side
- 21: abutment side
- 22: housing wall
- 23: contact side
- 24: central opening of the first connector
- 25: plugging direction
- 27: flange section
- 29: flange
- 31: sealing lip
- 33: wave trough
- 35: wave crest
- 37: minimum
- 39: maximum
- 41: corner
- 43: sealing lip
- A: axial direction
- R: radial direction
- U: circumferential direction

## Claims

1. Connector seal (1) for sealing a gap (7) between a first connector (3) and a second connector (5) of a plug connection in a state of being plugged together, wherein the connector seal (1) extends in a self-contained manner along a circumferential direction (U) around a central opening (9), wherein the connector seal (1) comprises two face sides (13, 15) disposed opposite one another in an axial direction (A), wherein the connector seal (1) comprises an inner side (17) facing the central opening (9) in the radial direction (R) and an outer side (19) facing away from the central opening (9) in the radial direction (R), one of which is an abutment side (21) for the abutment against the first connector (3) and the other a contact side (23) for the abutment, in particular in a sealing manner, against the second connector (5) in the state of the plug connection being plugged together, **characterized in that** the contact side (23) comprises at least one sealing lip (31) which extends along the circumferential direction (U) and the position of which changes in a wave-shaped manner in the axial direction (A).

2. Connector seal (1) according to claim 1, **characterized in that** the outer side (19) is the contacting side (23).

3. Connector seal (1) according to claim 1 or 2, **characterized in that** the abutment side (21) is provided with at least one sealing lip (43).

4. Connector seal (1) according to claim 3, **characterized in that** the at least one sealing lip (43) of the abutment side (21) likewise comprises a wave shape.

5. Connector seal (1) according to any one of claims 1 to 4, **characterized in that** the contact side (23) comprises two or more sealing lips (31) which are arranged one above the other in the axial direction (A).

6. Connector seal (1) according to claim 5, **characterized in that** at least two of the sealing lips (31) extend equidistant from one another along the circumferential direction (U).

7. Connector seal (1) according to any one of claims 1 to 6, **characterized in that** the wave shape of the at least one sealing lip (31) comprises at least two maxima (39) which are arranged to be diametrically opposite to one another across the central opening (9).

8. Connector seal (1) according to any one of claims 1 to 7, **characterized in that** the wave shape of the sealing lip (31) comprises more than two maxima (39) which are arranged at the same distance from one another in the circumferential direction (U).

9. Connector seal (1) according to any one of claims 1 to 8, **characterized in that** one of the axial face sides (13, 15) comprises a flange section (27) at which the cross section of the connector seal (1) is enlarged.

10. Connector seal (1) according to claim 9, **characterized in that** at least one maximum (39) of the wave-shaped sealing lip (31) extends up to the face side (13, 15) which is disposed opposite the flange section (39).

11. Connector seal (1) according to claim 9 or 10, **characterized in that** at least one minimum (37) of the wave-shaped sealing lip (31) extends up to the flange section (27).

12. Connector seal (1) according to one of the claims 1 to 11, **characterized in that** the connector seal (1), when viewed in the axial direction (A), has the shape of a rectangle, and at least one maximum (39) of the wave-shaped sealing lip (31) is arranged at a corner (41) of the rectangular shape.

13. Connector (3) with a housing wall (22) extending along a circumferential direction (U) of the connector (3) around a central opening (9) and with at least one connector seal (1) according to any one of claims 1 to 12 which abuts with its abutment side (21) against the housing wall (22).

14. Plug connection comprising a first connector (3), a second connector (5), and a connector seal (1) according to any one of claims 1 to 12, wherein the connector seal (1) is arranged in a sealing manner in a gap (7) between the two connectors (3, 5) when the two connectors (3, 5) are in a state of being plugged together.
